# EUROPEAN PATENT APPLICATION

(11) **EP 4 557 043 A1**
(43) Date of publication of application: **21.05.2025**
(21) Application number: 23855022.2
(22) Date of filing: 27.06.2023
(51) Int. Cl.: G06F 1/16, G06F 3/041, C09J 7/00

(54) **ELECTRONIC DEVICE COMPRISING PROTECTIVE STRUCTURE OF ELECTROMAGNETIC INDUCTION PANEL**

(30) Priority: 17.08.2022 KR 20220102980; 16.09.2022 KR 20220117352
(71) Applicant: Samsung Electronics Co., Ltd., Suwon-si, Gyeonggi-do 16677 (KR)
(72) Inventor: JUNG, Hyunsuk, Suwon-si, Gyeonggi-do 16677 (KR); PARK, Sangil, Suwon-si, Gyeonggi-do 16677 (KR)
(74) Representative: HGF
(86) International application number: PCT/KR2023/008974
(87) International publication number: WO 2024/039051

(57) **Abstract**

An electronic device according to an embodiment may comprise: a first housing; a second housing; a hinge structure rotatably connecting the first housing with the second housing; a flexible display arranged on the first housing and the second housing across the hinge structure; and an electromagnetic induction panel arranged on one surface of the flexible display. The electromagnetic induction panel may further comprise: a first plate arranged on one surface of the electromagnetic induction panel facing the flexible display along a folding axis of the hinge structure; and second plates which are arranged on the other surface of the electromagnetic induction panel facing the hinge structure, overlap at least one conductive via arranged in a first area when viewed from above the electromagnetic induction panel, and are spaced apart from each other. Other embodiments are possible.

## Description

### [Technical Field]

Embodiments to be described later relate to an electronic device including a protective structure of an electromagnetic induction panel.

### [Background Art]

An electronic device may include an electromagnetic induction panel linked with a stylus pen to provide various user experiences to a user of the electronic device. In order to increase portability of the electronic device, the electronic device may be deformed. The electromagnetic induction panel included in the deformable electronic device may require a protective structure that protects the electromagnetic induction panel.

### [Disclosure]

### [Technical Solution]

According to an embodiment, an electronic device may include a housing including a first housing and a second housing, a hinge structure that rotatably couples the first housing and the second housing, a flexible display disposed on the first housing and the second housing across the hinge structure, and an electromagnetic induction panel disposed on a surface of the flexible display facing an inside of the housing. According to an embodiment, the electromagnetic induction panel may include a plurality of layers, and at least one conductive via penetrating at least a portion of the plurality of layers within a first region of the electromagnetic induction panel, the first region overlapping the hinge structure when viewing the flexible display from above. According to an embodiment, the electromagnetic induction panel may further include a first plate disposed on a surface of the electromagnetic induction panel facing the flexible display along a folding axis of the hinge structure within the first region, and second plates disposed on another surface of the electromagnetic induction panel facing the hinge structure, overlapping the at least one conductive via when viewing the electromagnetic induction panel from above, and spaced apart from each other.

According to an embodiment, an electronic device may include a housing including a first housing and a second housing, a hinge structure that rotatably couples the first housing and the second housing, a flexible display disposed on the first housing and the second housing across the hinge structure, and an electromagnetic induction panel disposed on a surface of the flexible display facing an inside of the housing. According to an embodiment, the electromagnetic induction panel may include a plurality of layers, and at least one conductive via penetrating at least a portion of the plurality of layers within a first region of the electromagnetic induction panel, the first region overlapping the hinge structure when viewing the flexible display from above, a dummy pattern disposed within a second region extending from the first region, and a first conductive pattern, disposed between the dummy pattern, extending in a direction perpendicular to the folding axis of the hinge structure from the at least one conductive via. According to an embodiment, the electromagnetic induction panel may further include a first plate disposed on a surface of the electromagnetic induction panel facing the flexible display along the folding axis of the hinge structure within the first region, and second plates disposed on another surface of the electromagnetic induction panel facing the hinge structure, overlapping the at least one conductive via when viewing the electromagnetic induction panel from above, and spaced apart from each other.

### [Description of the Drawings]

FIG. 1 is a block diagram illustrating an electronic device in a network environment according to various embodiments.
FIG. 2A illustrates an example of an unfolded state of an electronic device according to an embodiment.
FIG. 2B illustrates an example of a folded state of an electronic device according to an embodiment.
FIG. 2C is an exploded view of an electronic device according to an embodiment.
FIG. 3 is a partial cross-sectional view of an exemplary electronic device.
FIG. 4A is a top plan view of an exemplary electromagnetic induction panel.
FIG. 4B illustrates a portion of an electronic device in an exemplary folded state.
FIG. 5A is a partial top plan view of an exemplary electromagnetic induction panel.
FIG. 5B is a partial bottom view of an exemplary electromagnetic induction panel.

### [Mode for Invention]

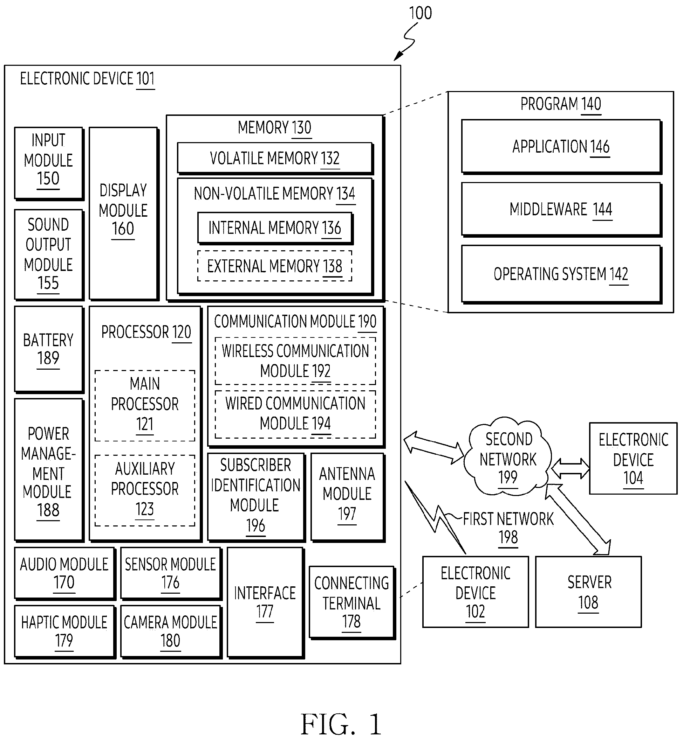

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

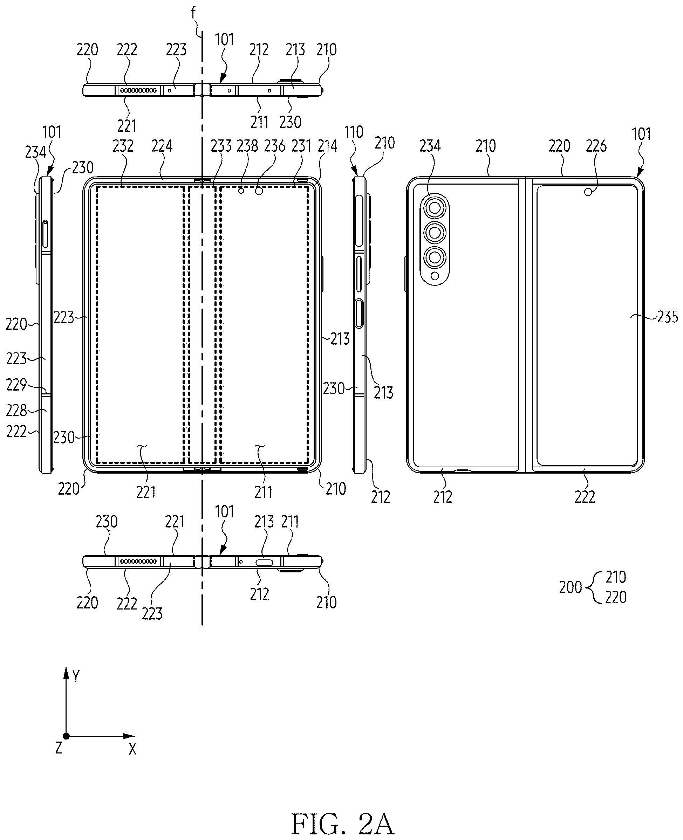

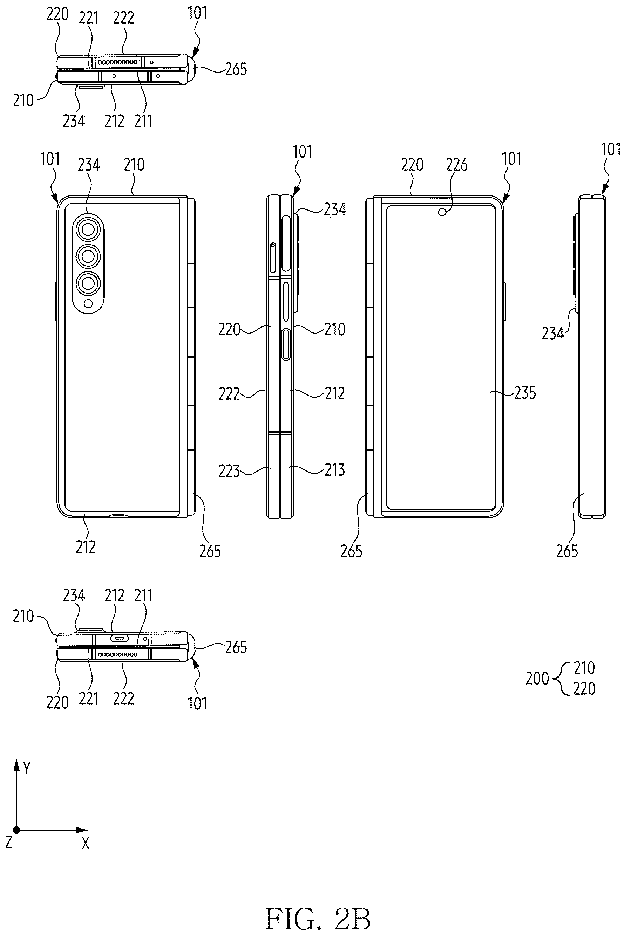

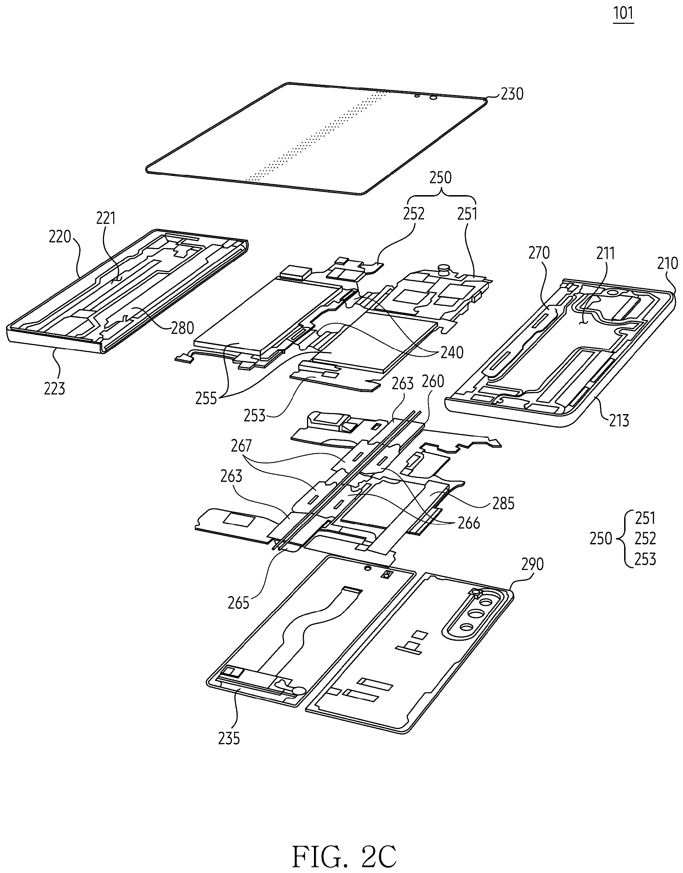

FIG. 2A illustrates an example of an unfolded state of an electronic device according to an embodiment. FIG. 2B illustrates an example of a folded state of an electronic device according to an embodiment. FIG. 2C is an exploded view of an electronic device according to an embodiment.

Referring to FIGS. 2A, 2B, and 2C, an electronic device 101 may include a housing 200 and a flexible display panel 230. The housing 200 may include a first housing 210 and a second housing 220.

According to an embodiment, the first housing 210 may include a first surface 211, a second surface 212 facing away from the first surface 211, and a first lateral surface 213 covering at least a portion of the first surface 211 and the second surface 212. According to an embodiment, the second surface 212 may further include at least one camera 234 exposed through a portion of the second surface 212. According to an embodiment, the first housing 210 may include a first protection member 214 disposed along a periphery of the first surface 211. According to an embodiment, the first housing 210 may provide a space formed by the first surface 211, the second surface 212, and the first lateral surface 213 as a space for mounting components of the electronic device 101. According to an embodiment, the first lateral surface 213 and a second lateral surface 223 may include a conductive material, a non-conductive material, or a combination thereof. For example, the second lateral surface 223 may include a conductive member 228 and a non-conductive member 229. The conductive member 228 may include a plurality of conductive members and the plurality of conductive members may be spaced apart from each other. The non-conductive member 229 may be disposed between the plurality of conductive members. An antenna structure may be formed by a portion of the plurality of conductive members and a plurality of non-conductive members, or a combination thereof.

According to an embodiment, the second housing 220 may include a third surface 221, a fourth surface 222 faced away from the third surface 221, and the second lateral surface 223 covering at least a portion of the third surface 221 and the fourth surface 222. According to an embodiment, the fourth surface 222 may further include a display panel 235 disposed on the fourth surface 222. A camera 226 may be disposed to face the fourth surface 222 inside the second housing 220 to obtain an external image through the fourth surface 222. The camera 226 may be covered by the display panel 235 by being disposed under the display panel 235 and. According to an embodiment, the camera 226 may be disposed under the display panel 235, and the display panel 235 may include an opening aligned with a lens of the camera 226 and transmitting light from the outside to the camera 226. According to an embodiment, each of the first housing 210 and the second housing 220 may include each of the first protection member 214 and a second protection member 224. The first protection member 214 and the second protection member 224 may be disposed on the first surface 211 and the third surface 221 along a periphery of the flexible display panel 230. The first protection member 214 and the second protection member 214 may prevent a foreign substance (e.g., dust or moisture) from introducing through a gap between the flexible display panel 230 and the first housing 210 and the second housing 220. The first protection member 214 may be disposed along a periphery of a first display region 231, and the second protection member 224 may be disposed along a periphery of a second display region 232. The first protection member 214 may be formed by being attached to the first lateral surface 213 of the first housing 210, or may be integrally formed with the first lateral surface 213. The second protection member 224 may be formed by being attached to the second lateral surface 213 of the second housing 220, or may be integrally formed with the second lateral surface 223.

According to an embodiment, the second lateral surface 223 may be rotatably (or pivotably) coupled to the first lateral surface 213 through a hinge structure 260 mounted on a hinge cover 265. The hinge structure 260 may include a hinge module 262, a first hinge plate 266, and a second hinge plate 267. The first hinge plate 266 may be connected to the first housing 210, and the second hinge plate 267 may be connected to the second housing 220. According to an embodiment, the second housing 220 may provide a space formed by the third surface 221, the fourth surface 222 faced away from the third surface 221, and the lateral surface 223 covering at least a portion of the third surface 221 and the fourth surface 222 as a space for mounting components of the electronic device 101. According to an embodiment, the flexible display panel 230 may include a window exposed toward the outside. The window may protect a surface of the flexible display panel 230 and transmit visual information provided from the flexible display panel 230 to the outside, by being formed of a transparent member. The window may include a glass material such as ultra-thin glass (UTG) or a polymer material such as polyimide (PI). According to an embodiment, the flexible display panel 230 may be disposed on the first surface 211 of the first housing 210 and the third surface 221 of the second housing 220 across the hinge cover 265. The flexible display panel 230 may include the first display region 231 disposed on the first surface 211 of the first housing, the second display region 232 disposed on the third surface 221 of the second housing, and a third display region 233 between the first display region 231 and the second display region 232. The first display region 231, the second display region 232, and the third display region 233 may form a front surface of the flexible display panel 230.

According to an embodiment, an opening may be formed in a portion of a screen display region of the flexible display panel 230, or a recess or an opening may be formed in a support member (e.g., bracket) supporting the flexible display panel 230. The electronic device 101 may include at least one or more of a sensor module 238 and a camera 236 aligned with the recess or the opening. For example, the first display region 231 may further include the camera 236 capable of obtaining an image from the outside through a portion of the first display region 231 and the sensor module 238 generating an electrical signal or a data value corresponding to an external environmental condition. According to an embodiment, at least one or more of the sensor module 238 and the camera 236 may be included on a rear surface of the flexible display panel 230 corresponding to the first display region 231 or the second display region 232 of the flexible display panel 230. For example, at least one of the camera 236 and the sensor module 238 may be disposed under the flexible display panel 230 and covered by the flexible display panel 230. At least one of the camera 236 and the sensor module 238 may not be exposed to the outside by being covered by the flexible display panel 230. However, it is not limited thereto, and the flexible display panel 230 may include an opening exposing the camera 236 and the sensor module 238 to the outside. Although not illustrated in FIGS. 2A and 2B, according to an embodiment, the flexible display panel 230 may further include a rear surface opposite to the front surface. According to an embodiment, the flexible display panel 230 may be supported by a first support member 270 of the first housing 210 and a second support member 280 of the second housing 220.

According to an embodiment, the hinge structure 260 may be configured to be rotatably coupled to the first support member 270 that forms the first housing 210 and is fastened to the first hinge plate 266, and the second support member 280 that forms the second housing 220 and is fastened to the second hinge plate 267.

According to an embodiment, the hinge cover 265 covering the hinge structure 260 may be at least partially exposed through a space between the first housing 210 and the second housing 220 while the electronic device 101 is in a folded state. In another embodiment, the hinge cover 265 may be covered by the first housing 210 and the second housing 220 while the electronic device 101 is in an unfolded state.

According to an embodiment, the electronic device 101 may be folded with respect to a folding axis 237 passing through the hinge cover 265. For example, the hinge cover 265 may be disposed between the first housing 210 and the second housing 220 of the electronic device 101 so that the electronic device 101 may be bent, curved, or folded. For example, the first housing 210 may be connected to the second housing 220 through the hinge structure 260 mounted on the hinge cover 265 and may rotate with respect to the folding axis 237. For example, the hinge structure 260 may include the hinge modules 262 disposed at both ends of the first hinge plate 266 and the second hinge plate 267. Since the hinge module 262 includes hinge gears engaged with each other inside, the hinge module 262 may rotate the first hinge plate 266 and the second hinge plate 267 with respect to the folding axis. The first housing 210 coupled to the first hinge plate 266 may be connected to the second housing 220 coupled to the second hinge plate 267, and may rotate with respect to the folding axis by the hinge modules 262.

According to an embodiment, the electronic device 101 may be folded so that the first housing 210 and the second housing 220 may face each other by rotating with respect to the folding axis 237. According to an embodiment, the electronic device 101 may be folded so that the first housing 210 and the second housing 220 are stacked or overlapped with each other.

Referring to FIG. 2C, the electronic device 101 may include the first support member 270, the second support member 280, the hinge structure 260, the flexible display panel 230, a printed circuit board 250, a battery 255, the hinge cover 265, an antenna 285, the display panel 235, and a rear plate 290. According to an embodiment, the electronic device 101 may omit at least one of the components or may additionally include another component. At least one of the components of the electronic device 101 may be the same as or similar to at least one of the components of the electronic device 101 of FIGS. 1, 2A, or 2B, and so redundant description will be omitted below.

The hinge structure 260 may include the hinge module 262, the first hinge plate 266, and the second hinge plate 267. The hinge module 262 may include a hinge gear 263 meaning that the first hinge plate 266 and the second hinge plate 267 are pivotable. The hinge gear 263 may rotate the first hinge plate 266 and the second hinge plate 267 while being engaged with each other to rotate. The hinge module 262 may be a plurality of hinge modules. Each of the plurality of hinge modules may be disposed at both ends formed by the first hinge plate 266 and the second hinge plate 267.

The first hinge plate 266 may be coupled to the first support member 270 of the first housing 210, and the second hinge plate 267 may be coupled to the second support member 280 of the second housing 220. The first housing 210 and the second housing 220 may rotate to correspond to the rotation of the first hinge plate 266 and the second hinge plate 267.

The first housing 210 may include the first support member 270, and the second support member 280. The first support member 270 may be partially covered by the first lateral surface 213, and the second support member 280 may be partially covered by the second lateral surface 223. The first support member 270 may be integrally formed with the first lateral surface 213, and the second support member 280 may be integrally formed with the second lateral surface 223. According to an embodiment, the first support member 270 may be formed separately from the first lateral surface 213, and the second support member 280 may be formed separately from the second lateral surface 223. The first lateral surface 213 and the second lateral surface 223 may be used as an antenna, by being formed of a metal material, a non-metal material, or a combination thereof.

The first support member 270 may be coupled to the flexible display panel 230 on a surface, and may be coupled to the rear plate 290 on another surface. The second support member 280 may be coupled to the flexible display panel 230 on a surface, and may be coupled to the display panel 235 on another surface.

The printed circuit board 250 and the battery 255 may be disposed between a surface formed by the first support member 270 and the second support member 280 and a surface formed by the display panel 235 and the rear plate 290. The printed circuit board 250 may be separated in order to be disposed in each of the first support member 270 of the first housing 210 and the second support member 280 of the second housing 220. A shape of a first printed circuit board 251 disposed in the first support member 270 and a shape of a second printed circuit board 252 disposed in the second support member 280 may be different from each other according to a space of the inside of the electronic device. Components for implementing various functions of the electronic device 10 may be mounted in the first printed circuit board 251 and the second printed circuit board 252. According to an embodiment, the components for implementing an overall function of the electronic device 101 may be mounted in the first printed circuit board 251, and electronic components for implementing a partial function of the first printed circuit board 251 or components for driving the display panel 235 disposed on the fourth surface 222, may be disposed in the second printed circuit board 252. The first printed circuit board 251 and the second printed circuit board 252 may be electrically connected by a flexible printed circuit board 240.

For example, the battery 255, which is a device for supplying power to at least one component of the electronic device 101, may include a non-rechargeable primary battery, or a rechargeable secondary battery, or a fuel cell. At least a portion of the battery 255 may be disposed on substantially the same plane as the printed circuit board 250. A surface formed as substantially the same plane of the printed circuit board 250 and the battery 255 may be disposed on a surface (e.g., a surface facing the second surface 212 and the fourth surface 222 or a surface facing the display panel 235 and the rear plate 290) of the first support member 270 and the second support member 280. For example, the flexible display panel 230 may be disposed on the first surface 211 and the third surface 221, and the printed circuit board 250 and the battery 255 may be disposed on the second surface 212 and the fourth surface 222 facing the surface on which the flexible display panel 230 is disposed.

In an embodiment, the antenna 285 may be disposed between the rear plate 290 and the battery 255. For example, the antenna 285 may include a near field communication (NFC) antenna, a wireless charging antenna, and/or a magnetic secure transmission (MST) antenna. For example, the antenna 285 may perform short-range communication with an external device, or wirelessly transmit and receive power required for charging.

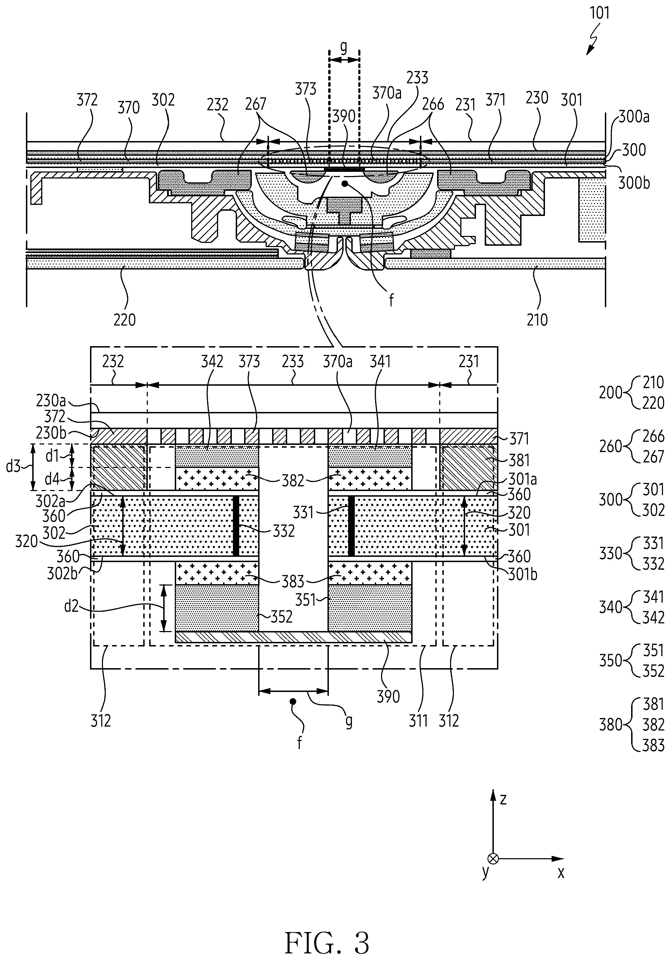

FIG. 3 is a partial cross-sectional view of an exemplary electronic device.

Referring to FIG. 3, the electronic device 101 may include a housing 200, a flexible display panel 230, a hinge structure 260, an electromagnetic induction panel 300, a support plate 370, an adhesive layer 380, and a film member 390. The electromagnetic induction panel 300 may include a plurality of layers 320, at least one conductive via 330, a first plate 340, a second plate 350, and a conductive pattern 360.

According to an embodiment, the housing 200 may include a first housing 210 and a second housing 220. The first housing 210 and the second housing 220 may define an internal space of the housing 200. For example, a first surface (e.g., the first surface 211 of FIG. 2A) of the first housing 210, a second surface (e.g., the second surface 212 of FIG. 2A) facing the first surface 211, and a first lateral surface (e.g., the first lateral surface 213 of FIG. 2A) covering at least a portion of the first surface 211 and the second surface 212, may provide a portion of the internal space of the electronic device 101. A third surface (e.g., the third surface 221 of FIG. 2A) of the second housing 220, a fourth surface (e.g., the fourth surface 222 of FIG. 2A) facing the third surface 221, and a second lateral surface (e.g., the second lateral surface 223 of FIG. 2A) covering at least a portion of the third surface 221 and the fourth surface 222 may provide the rest of the internal space of the electronic device 101 except for the portion.

According to an embodiment, the hinge structure 260 may rotatably connect the first housing 210 and the second housing 220. For example, the first hinge plate 266 of the hinge structure 260 may be disposed in the first housing 210 and connected to at least a portion of the first housing 210. The second hinge plate 267 of the hinge structure 260 may be disposed in the second housing 220 and connected to at least a portion of the second housing 220. The hinge plates 266 and 267 may be rotatable with respect to a folding axis f of the hinge structure 260. Since the hinge plates 266 and 267 are rotatable with respect to the folding axis f, the first housing 210 and the second housing 220 may be rotatably connected with respect to the folding axis f.

According to an embodiment, the flexible display panel 230 may be disposed on the first housing 210 and the second housing 220 across the hinge structure 260. The flexible display panel 230 may include a first display region 231, a second display region 232, and a third display region 233. The third display region 233 may be a region overlapping at least a portion of the hinge structure 260 when viewing the flexible display panel 230 from above. The third display region 233 may be a region in which the flexible display panel 230 is deformable. The first display region 231 may be a region extending from the third display region 233 and disposed on the first housing 210. The second display region 232 may be a region extending from the third display region 233 and disposed on the second housing 220.

According to an embodiment, the electromagnetic induction panel 300 may be disposed on an internal surface 230b of the flexible display panel 230 facing the inside of the housing 200. In this document, when an element is mentioned as being "on" another element, it should be understood that it may be directly on another element, or intervening elements may exist therebetween. For example, in this document, "B disposed on A" may indicate "B disposed over A". For example, in this document, "B disposed on A" may indicate "B faced away from A". For example, "the electromagnetic induction panel 300 disposed on the internal surface 230b of the flexible display panel 230" may indicate "the electromagnetic induction panel 300 in contact with the internal surface 230b of the flexible display panel 230". For example, "the electromagnetic induction panel 300 disposed on the internal surface 230b of a flexible display panel 230" may indicate "the electromagnetic induction panel 300 faced away from the internal surface 230b of the flexible display panel 230. The electromagnetic induction panel 300 may be disposed between the hinge structure 260 and the flexible display panel 230.

According to an embodiment, the electromagnetic induction panel 300 may include a first electromagnetic induction panel 301 disposed in the first housing 210 and a second electromagnetic induction panel 302 disposed in the second housing 220. The first electromagnetic induction panel 301 and the second electromagnetic induction panel 302 may be spaced apart from each other at an interval g with respect to the folding axis f of the hinge structure 260. The first electromagnetic induction panel 301 and the second electromagnetic induction panel 302 may be substantially symmetrical with respect to the folding axis f. For example, the first electromagnetic induction panel 301 may include a fifth surface 301a facing the flexible display panel 230 and a sixth surface 301b facing the fifth surface 301a and facing the hinge structure 260. The second electromagnetic induction panel 302 may include a seventh surface 302a facing the flexible display panel 230 and an eighth surface 302b facing the seventh surface 302a and facing the hinge structure 260. The fifth surface 301a and the seventh surface 302a may configure at least a portion of a surface 300a of the electromagnetic induction panel 300 facing the flexible display panel 230. The sixth surface 301b and the eighth surface 302b may configure at least a portion of another surface 300b facing the surface 300a of the electromagnetic induction panel 300 and facing the hinge structure 260.

According to an embodiment, the electromagnetic induction panel 300 may receive an input signal from an external object. For example, the external object may be an electronic pen. The first electromagnetic induction panel 301 and/or the second electromagnetic induction panel 302 may receive the input signal through an electromagnetic interaction with the electronic pen. The first electromagnetic induction panel 301 and/or the second electromagnetic induction panel 302 may form an electromagnetic field based on a current applied inside. The electronic pen may form another electromagnetic field different from the electromagnetic field, based on the current applied from the electromagnetic field to a coil inside the electronic pen. The first electromagnetic induction panel 301 and/or the second electromagnetic induction panel 302 may recognize the electromagnetic field formed from the electronic pen. The electronic device 101 may receive an input inputted into the display regions 231, 232, and 233 of the flexible display panel 230, based on recognizing the electromagnetic field formed from the electronic pen, through the first electromagnetic induction panel 301 and/or the second electromagnetic induction panel 302. The input may be obtained based on a contact of the electronic pen in the display regions 231, 232, and 233, or the electronic pen being positioned in a preset distance from the display regions 231, 232, and 233.

According to an embodiment, the electromagnetic induction panel 300 may include a first region 311 overlapping at least a portion of the hinge structure 260 and a second region 312 extending from the first region 311, when viewing the flexible display panel 230 from above. The first region 311 may be a region in which deformation of the electromagnetic induction panel 300 is possible. For example, the first region 311 may be a region overlapping the third display region 233 of the flexible display panel 230 and the folding axis f of the hinge structure 260, when viewing the flexible display panel 230 from above. The first region 311 may include a portion in which the first electromagnetic induction panel 301 and the second electromagnetic induction panel 302 among the electromagnetic induction panel 300 are spaced apart from each other at the interval g. For example, when viewing the electromagnetic induction panel 300 from above, a portion of the first region 311 may overlap the first hinge plate 266 of the hinge structure 260. The rest of the first region 311 may overlap the second hinge plate 267 of the hinge structure 260, when viewing the electromagnetic induction panel 300 from above. The first region 311 may be a region that may be deformed according to a change in a state of the electronic device 101.

According to an embodiment, the plurality of layers 320 may be disposed in the electromagnetic induction panel 300. For example, the plurality of layers 320 may be disposed between the surface 300a facing the flexible display panel 230 of the electromagnetic induction panel 300 and the other surface 300b facing the surface 300a, and facing the hinge structure 260. The plurality of layers 320 may extend in a direction in which the electromagnetic induction panel 300 extends in the electromagnetic induction panel 300. The electromagnetic induction panel 300 may apply a current to the plurality of layers 320 disposed in the electromagnetic induction panel 300. The electromagnetic induction panel 300 may form the electromagnetic field, based on the applied current.

According to an embodiment, the at least one conductive via 330 may penetrate at least a portion of the plurality of layers 320 of the electromagnetic induction panel 300. The at least one conductive via 330 may be disposed within the first region 311 of the electromagnetic induction panel 300. The at least one conductive via 330 may electrically connect the plurality of layers 320 to each other by penetrating the plurality of layers 320. For example, a current applied to at least a portion of layers of the plurality of layers 320 may be transmitted to at least another portion of layers other than the at least a portion of the layers of the plurality of layers 320 through the at least one conductive via 330 penetrating the plurality of layers 320.

According to an embodiment, the first plate 340 may be disposed on the surface 300a of the electromagnetic induction panel 300 facing the flexible display 230. The first plate 340 may cover at least a portion of the surface 300a disposed in the first region 311 of the electromagnetic induction panel 300. The first plate 340 may be deformable in response to the first region 311 being deformed according to the change in the state of the electronic device 101. The first plate 340 may include a gap corresponding to the interval g between the first electromagnetic induction panel 301 and the second electromagnetic induction panel 302 spaced apart from each other. For example, the first plate 340 may include a first portion 341 disposed in the first electromagnetic induction panel 301 and a second portion 342 disposed in the second electromagnetic induction panel 302. The first portion 341 may be disposed, within the first region 311 of the electromagnetic induction panel 300, on the fifth surface 301a facing the flexible display panel 230 of the first electromagnetic induction panel 301. The second portion 342 may be disposed, within the first region 311, on the seventh surface 302a facing the flexible display panel 230 of the second electromagnetic induction panel 302. In the first region 311, when viewing the electromagnetic induction panel 300 from above, the first portion 341 and the second portion 342 may be spaced apart by the interval g corresponding to the interval g between the first electromagnetic induction panel 301 and the second electromagnetic induction panel 302 spaced apart from each other. The first plate 340 may reduce damage to the electromagnetic induction panel 300 disposed in the first region 311 according to the state change of the electronic device 101, by being disposed in the first region 311 of the electromagnetic induction panel 300 to reinforce rigidity of the first region 311.

According to an embodiment, the second plate 350 may be disposed on the other surface 300b of the electromagnetic induction panel 300 that faces the surface 300a of the electromagnetic induction panel 300 and is directed to the hinge structure 260. When viewing the electromagnetic induction panel 300 from above, the second plate 350 may overlap the at least one conductive via 330 disposed within the first region 311 of the electromagnetic induction panel 300. For example, the at least one conductive via 330 may include a conductive via 331 disposed on the first electromagnetic induction panel 301 and a conductive via 332 disposed on the second electromagnetic induction panel 302, within the first region 311 of the electromagnetic induction panel 300. The second plate 350 may include a third portion 351 disposed on the first electromagnetic induction panel 301 and a fourth portion 352 disposed on the second electromagnetic induction panel 302. The third portion 351 may be disposed on the seventh surface 301b facing the hinge structure 260 of the first electromagnetic induction panel 301, and may overlap the conductive via 331 when viewing the electromagnetic induction panel 300 from above. The fourth portion 352 may be disposed on the eighth surface 302b facing the hinge structure 260 of the second electromagnetic induction panel 302, and may overlap the conductive via 332 when viewing the electromagnetic induction panel 300 from above. The electromagnetic induction panel 300 may reinforce the rigidity of the first region 311 in which the at least one conductive via 330 is disposed, by including the second plate 350 overlapping the at least one conductive via 330 disposed within the first region 311, when viewing the electromagnetic induction panel 300 from above. The second plate 350 may reduce damage to the at least one conductive via 330 and the electromagnetic induction panel 300 disposed in the first region 311 according to the state change of the electronic device 101, by reinforcing the rigidity of the first region 311.

According to an embodiment, when viewing the electromagnetic induction panel 300 from above, the second plate 350 may overlap the first plate 340 within the first region 311 of the electromagnetic induction panel 300. For example, viewing the electromagnetic induction panel 300 from above, the third portion 351 of the second plate 350 may overlap the first portion 341 of the first plate 340. When viewing the electromagnetic induction panel 300 from above, the fourth portion 352 of the second plate 350 may overlap the second portion 342 of the first plate 340. Since the first portion 341 and the second portion 342 are spaced apart from each other by the intervals corresponding to the interval g between the first electromagnetic induction panel 301 and the second induction panel 302, the third portion 351 and the fourth portion 352 of the second plate 350 may be spaced apart from each other by the interval corresponding to the interval g. Since the second plate 350 overlaps the at least one conductive via 330 disposed in the first region 311 when viewing the electromagnetic induction panel 300 from above, the first plate 340 may be disposed to overlap the at least one conductive via 330 in the first region 311 when viewing the electromagnetic induction panel 300 from above. For example, when viewing the electromagnetic induction panel 300 from above, the first portion 341 of the first plate 340 may overlap the conductive via 331 disposed in the first electromagnetic induction panel 301, and the second portion 342 of the first plate 340 may overlap the conductive via 332 disposed in the second electromagnetic induction panel 302. Since the first portion 341 and the second portion 342 are spaced apart by the interval g, and the third portion 351 and the fourth portion 352 are spaced apart by the interval g, the first plate 340 and the second plate 350 may provide flexibility to the first region 311 of the electromagnetic induction panel 300 according to the state change of the electronic device 101. When viewing the electromagnetic induction panel 300 from above, since the first plate 340 overlaps the second plate 350 overlapping the at least one conductive via 330 disposed in the first region 311, the damage to the electromagnetic induction panel 300 and the at least one conductive via 330 disposed in the first region 311, according to the state change of the electronic device 101 may be reduced.

According to an embodiment, a thickness d2 of the second plate 350 may be thicker than a thickness d1 of the first plate 340. Since the thickness d1 of the first plate 340 is thinner than the thickness d2 of the second plate 350, the first plate 340 may reduce formation of unevenness in the third display region 233 of the flexible display panel 230 which the first plate 340 faces.

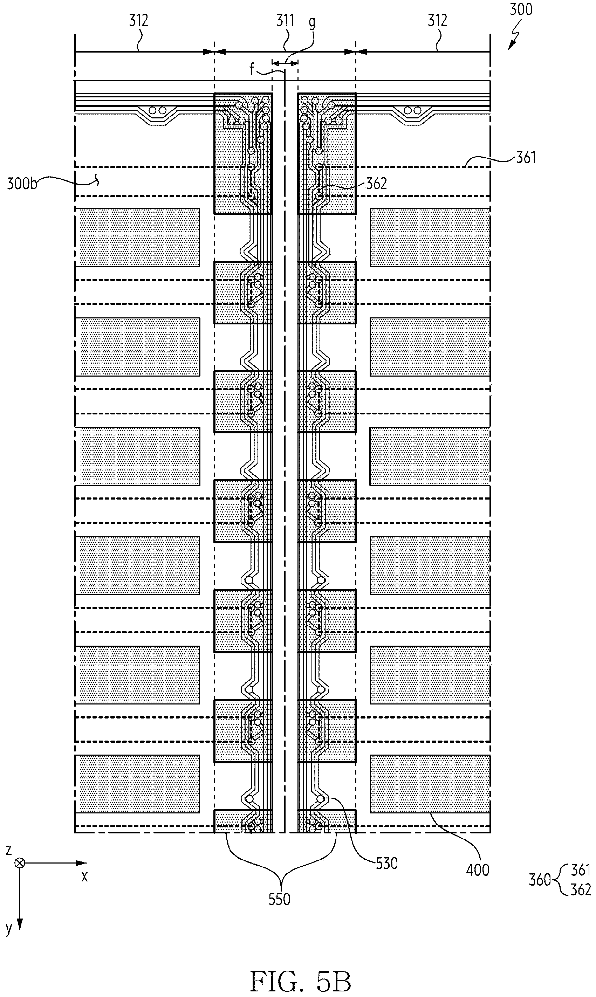

Although the electromagnetic induction panel 300 includes the second plate 350, it is not limited thereto, and the electromagnetic induction panel 300 may include a plurality of second plates (e.g., second plates 550 of FIG. 5B) disposed on the other surface 300b of the electromagnetic induction panel 300 facing the hinge structure 260. The thickness d2 of each of the plurality of second plates may be thicker than the thickness d1 of the first plate.

According to an embodiment, the first plate 340 may include at least one of polyimide (PI), polyethylene terephthalate (PET), or polyethylene naphthalate (PEN). The second plate 350 may include at least one of PI, PET, PEN, epoxy resin, or carbon fiber reinforced plastic (CFRP).

According to an embodiment, the conductive pattern 360 may be disposed on the surface 300a of the electromagnetic induction panel 300 or the other surface 300b facing the surface 300a. At least a portion of the conductive patterns 360 may be in contact with the at least one conductive via 330 disposed within the first region 311 of the electromagnetic induction panel 300. For example, the at least one conductive via 330 may penetrate the plurality of layers 320 within the first region 311 of the electromagnetic induction panel 300. An end of the at least one conductive via 330 may be disposed on the surface 300a of the electromagnetic induction panel 300, and another end of the at least one conductive via 330 may be disposed on the other surface 300b facing the surface 300a of the electromagnetic induction panel 300. The conductive pattern 360 may be in contact with the end of the at least one conductive via 330, by being disposed on the surface 300a within the first region 311. The conductive pattern 360 may be in contact with the other end of the at least one conductive via 330, by being disposed on the other surface 300b within the first region 311. The conductive pattern 360 disposed on the surface 300a may be electrically connected to the conductive pattern 360 disposed on the other surface 300b through the at least one conductive via 330 within the first region 311. The conductive pattern 360 may be electrically connected to the plurality of layers 320 through the at least one conductive via 330.

According to an embodiment, the support plate 370 may be disposed between the flexible display panel 230 and the electromagnetic induction panel 300. When viewing the flexible display panel 230 from above, the support plate 370 may include a first rigid region 371 overlapping the first display region 231, a second rigid region 372 overlapping the second display region 232, and a flexible region 373 overlapping the third display region 233, of the flexible display panel 230. The first rigid region 371 and the second rigid region 372 may be a region that substantially forms a plane. The flexible region 373 may be a region that may be deformable according to the state change of the electronic device 101. For example, when viewing the flexible display panel 230 from above, since the third display region 233 overlaps the first region 311 of the electromagnetic induction panel 300, the flexible region 373 of the support plate 370 may overlap the first region 311. The flexible region 373 may be deformed together with the third display region 233 of the flexible display panel 230 and the first region 311 of the electromagnetic induction panel 300 according to the state change of the electronic device 101.

According to an embodiment, the support plate 370 may include a plurality of slits 370a parallel to the folding axis f of the hinge structure 260 within the flexible region 373. The support plate 370 may be configured to be deformable in response to deformation of the third display region 233 of the flexible display panel 230 and/or the first region 311 of the electromagnetic induction panel 300, by including the plurality of slits 370a in the flexible region 373.

According to an embodiment, the adhesive layer 380 may include a first adhesive layer 381, a second adhesive layer 382, and a third adhesive layer 383. The first adhesive layer 381 may be disposed between the electromagnetic induction panel 300 and the flexible display panel 230 within the second region 312 of the electromagnetic induction panel 300. The second adhesive layer 382 may be disposed between the surface 300a of the electromagnetic induction panel 300 facing the flexible display panel 230 and the first plate 340. The third adhesive layer 383 may be disposed between the other surface 300b facing the surface 300b of the electromagnetic induction panel 300 and facing the hinge structure 260, and the second plate 350. According to an embodiment, the second adhesive layer 382 and the third adhesive layer 383 may be configured with substantially the same or similar material. According to an embodiment, the first adhesive layer 381 may be disposed between the second region 312 of the electromagnetic induction panel 300 and the rigid regions 371 and 372 of the support plate 370.

According to an embodiment, a thickness d3 of the first adhesive layer 381 may be substantially the same as the sum of a thickness d4 of the second adhesive layer and the thickness d1 of the first plate 340. Since the thickness d3 is formed substantially equal to the sum of the thickness d4 and the thickness d1, formation of unevenness between the flexible region 373 and the rigid regions 371, and 372 of the support plate 370 disposed on the electromagnetic induction panel may be reduced. Since the thickness d3 is equal to the sum of the thickness d4 and the thickness d1, formation of unevenness between the third display region 233 and the first display region 231 or formation of unevenness between the third display region 233 and the second display region 232, in the flexible display panel 230 disposed on the electromagnetic induction panel 300 may be reduced. By reducing the unevenness, when viewing the flexible display panel 230 from the outside, visibility of a boundary between the first adhesive layer 381 and the first plate 340 may be reduced.

According to an embodiment, the film member 390 may extend along the folding axis f of the hinge structure 260 within the first region 311 of the electromagnetic induction panel 300. The film member 390 may be disposed on the second plate 350. For example, the film member 390 may be in contact with the third portion 351 and the fourth portion 352 of the second plate 350 and may extend in a direction (e.g., +y direction or -y direction) in which the folding axis f of the hinge structure 260 extends. The film member 390 may face the support plate 370 through a gap between the first electromagnetic induction panel 301 and the second electromagnetic induction panel 302. When viewing the electromagnetic induction panel 300 from above, the film member 390 may block a foreign substance introduced into the flexible region 373 of the support plate 370 and/or the flexible display panel 230 through the gap by overlapping the gap. According to an embodiment, the film member 390 may include thermos plastic polyurethane (TPU).

According to the above-described embodiment, within the first region 311 of the electromagnetic induction panel 300, when viewing the electromagnetic induction panel 300 from above, the electronic device 101 may reduce damage to the at least one conductive via 330 and/or the conductive pattern 360 according to the state change of the electronic device 101, by including the first plate 340 and the second plate 350 overlapping the at least one conductive via 330 and/or the conductive pattern 360 disposed in the first region 311. By having the preset thickness d1, the first plate 340 may reduce formation of unevenness in the support plate 370 and/or the flexible display panel 230 disposed on the electromagnetic induction panel 300. Since the thickness d2 of the second plate 350 is thicker than the thickness d1 of the first plate 340, the second plate 350 may reinforce the rigidity of the first region 311 of the electromagnetic induction panel 300 more than the first plate 340.

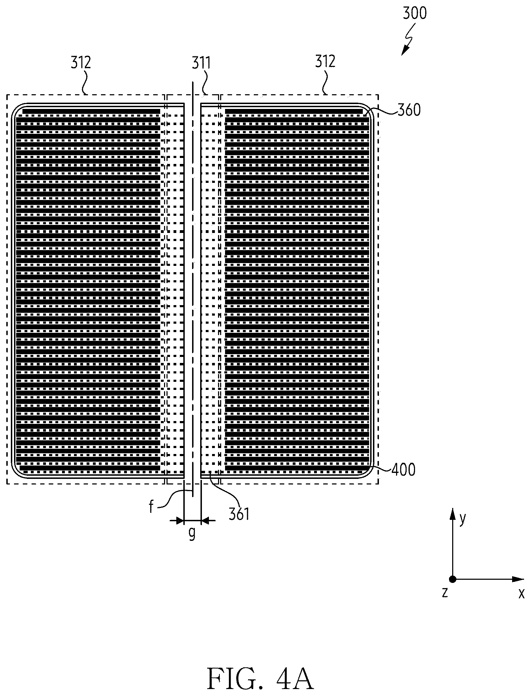

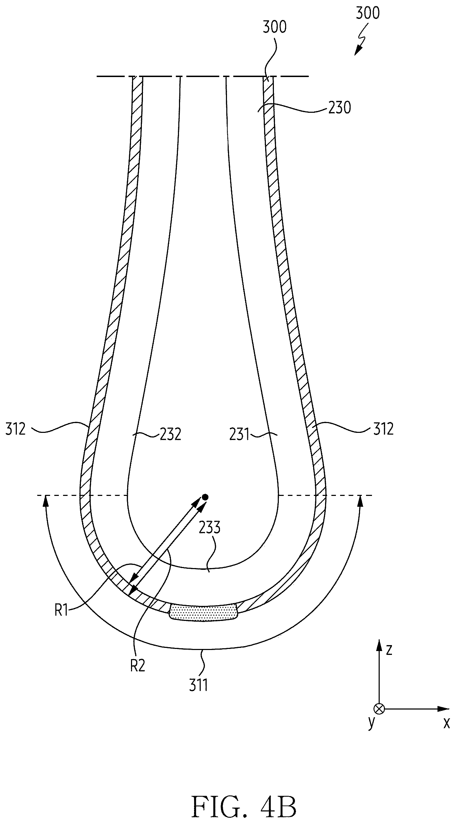

FIG. 4A is a top plan view of an exemplary electromagnetic induction panel. FIG. 4B illustrates a portion of an electronic device in an exemplary folded state.

Referring to FIGS. 4A and 4B, the electronic device 101 may include a flexible display panel 230 and an electromagnetic induction panel 300. The electromagnetic induction panel 300 may include a conductive pattern 360.

Referring to FIG. 4A, the conductive pattern 360 of the electromagnetic induction panel 300 may further include a first conductive pattern 361 extending in a direction (e.g., a +x direction or a -x direction) perpendicular to a folding axis f of a hinge structure (e.g., the hinge structure 260 of FIG. 2C). For example, the first conductive pattern 361 may extend from a gap between a first electromagnetic induction panel 301 and a second electromagnetic induction panel 302, across a first region 311 of the electromagnetic induction panel 300, to a second region 312 of the electromagnetic induction panel 300 in the +x direction or the -x direction. According to an embodiment, the first conductive pattern 361 may form a step between the first conductive patterns 361, by extending in the direction (e.g., +x or -x direction) perpendicular to the folding axis f of the hinge structure 260.

According to an embodiment, the electromagnetic induction panel 300 may further include a dummy pattern 400 disposed between the first conductive pattern 361. The dummy pattern 400 may be disposed in the second region 312 extending from the first region 311 of the electromagnetic induction panel 300. The first conductive pattern 361 may be disposed between the dummy pattern 400. For example, the first conductive pattern 361 may be disposed in the first region 311 of the electromagnetic induction panel 300 and the second region 312 extending from the first region 311. The dummy pattern 400 may be disposed between the first conductive pattern 361 disposed in the second region 312. Since the dummy pattern 400 is disposed in the second region 312, formation of the step may be reduced between the first conductive pattern 361 disposed in the second region 312. By reducing the formation of the step, the dummy pattern 400 may reduce formation of unevenness in a support plate (e.g., the support plate 370 of FIG. 3) and/or a flexible display panel (e.g., the flexible display panel 230 of FIG. 2A) disposed on the electromagnetic induction panel 300. By not including the dummy pattern 400 in the first region 311, flexibility may be provided to the first region 311 deformable according to a state change of the electronic device 101.

Referring to FIG. 4B, the first region 311 of the electromagnetic induction panel 300 has a curvature R2 corresponding to a curvature R1 of a third display region 233 overlapping the hinge structure 260 of the flexible display panel 230 in a folded state where a first housing 210 and a second housing 220 of the electronic device 101 face each other. For example, in the folded state of the electronic device 101, the curvature R2 of the first region 311 of the electromagnetic induction panel 300 may be substantially the same as the curvature R1 of the third display region 233 of the flexible display panel 230. The first region 311 of the electromagnetic induction panel 300 may support the third display region 233 of the flexible display panel 230 that is deformable according to the state of the electronic device 101. Since the first region 311 does not include the dummy pattern 400, the first region 311 may have substantially the same curvature R2 as the curvature R1 of the third display region 233 in the folded state of the electronic device 101. Since the curvature R2 is substantially the same as the curvature R1, the electromagnetic induction panel 300 may reduce the extent of the electromagnetic induction panel 300 disposed in the first region 311 in a -z direction. Through reduced extent in the -z direction, the electromagnetic induction panel 300 disposed in the first region 311 may prevent damage to the electromagnetic induction panel 300 in the case of a fall of the electronic device 101. Through reduced extent in the -z direction, the electromagnetic induction panel 300 disposed in the first region 311 may support the third display region 233 of the flexible display panel 230 in the folded state.

It has been described that the electronic device 101 is in-folded so that a first display region 231 and a second display region 232 face each other with respect to the folding axis f, but the arrangement is not limited thereto. The electronic device 101 may be out-folded so that each of the first display region 231 and the second display region 232 face the outside with respect to the folding axis f. By not including the dummy pattern 400 in the first region 311, the electromagnetic induction panel 300 may provide the flexibility to the deformable first region 311 in case that the electronic device 101 is out-folded.

According to the above-described embodiment, by including the dummy pattern 400 disposed between the first conductive pattern 361, in the second region 312, the electromagnetic induction panel 300 may reduce formation of unevenness in the flexible display panel 230 due to the first conductive pattern 361. By not including the dummy pattern 400, within the first region 311, the electromagnetic induction panel 300 may reduce the damage to the first region 311 according to the state change of the electronic device 101 and support the third display region 233 of the flexible display panel 230.

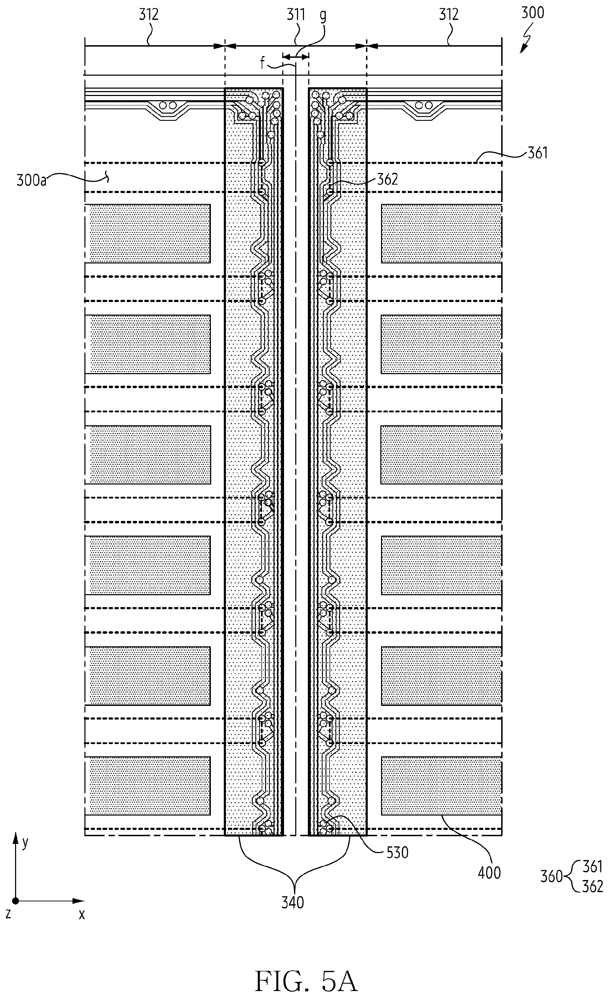

FIG. 5A is a partial top plan view of an exemplary electromagnetic induction panel. FIG. 5B is a partial bottom view of an exemplary electromagnetic induction panel.

Referring to FIGS. 5A and 5B, an electromagnetic induction panel 300 may include at least one conductive via (e.g., the at least one conductive via 330 of FIG. 3), a first plate 340, second plates (e.g., the second plates 350 of FIG. 3) 550, a conductive pattern 360, and a dummy pattern 400.

According to an embodiment, the at least one conductive via (e.g., the at least one conductive via 330 of FIG. 3) may include a plurality of conductive vias 530. The plurality of conductive vias 530 may be disposed along a folding axis f of a hinge structure (e.g., the hinge structure 260 of FIG. 2C) within a first region 311 of the electromagnetic induction panel 300. For example, when viewing the electromagnetic induction panel 300 from above, the plurality of conductive vias 530 may be disposed in a +y direction or a -y direction along the folding axis f of the hinge structure 260 within the first region 311 of the electromagnetic induction panel 300. At least a portion of the plurality of conductive vias 530 may be in contact with the conductive pattern 360 within the first region 311.

According to an embodiment, the conductive pattern 360 may include a first conductive pattern 361 and a second conductive pattern 362. The conductive pattern 360 may extend in a direction (e.g., a +x direction or a -x direction) perpendicular to the folding axis f of the hinge structure 260, and may be in contact with the at least one conductive via 330 within the first region 311 of the electromagnetic induction panel 300. The second conductive pattern 362 may be in contact with the at least one conductive via 330 and the first conductive pattern 361 within the first region 311.

According to an embodiment, the second conductive pattern 362 may extend along the folding axis f of the hinge structure 260 within the first region 311 of the electromagnetic induction panel 300. For example, within the first region 311 of the electromagnetic induction panel 300, the second conductive pattern 362 may be disposed in the +y direction or the -y direction along the folding axis f of the hinge structure 260. The second conductive pattern 362 may be in contact with each of the plurality of conductive vias 530 disposed along the folding axis f within the first region 311. By being disposed along the folding axis f, the second conductive pattern 362 may electrically connect each of the plurality of conductive vias 530 disposed within the first region 311. By being in contact with each of the plurality of conductive vias 530, the second conductive pattern 362 may be electrically connected to the first conductive pattern 361 that is in contact with each of the plurality of conductive vias 530.

Referring to FIG. 5A, the first plate 340 may be disposed on a surface 300a of the electromagnetic induction panel 300 facing a flexible display panel (e.g., the flexible display panel 230 of FIG. 2A) along the hinge structure 260 within the first region 311 of the electromagnetic induction panel 300.

According to an embodiment, the first plate 340 may overlap the first conductive pattern 361 within the first region 311 of the electromagnetic induction panel 300, when viewing the electromagnetic induction panel 300 from above. For example, the first plate 340 may be disposed on the first conductive pattern 361 disposed in the first region 311 along the folding axis f of the hinge structure 260, within the first region 311 of the electromagnetic induction panel 300. The first plate 340 may be disposed on the plurality of conductive vias 530 in contact with the first conductive pattern 361 within the first region 311. The first plate 340 may cover at least a portion of the plurality of conductive vias 530 and the first conductive pattern 361 on the surface 300a facing the flexible display panel 230 of the electromagnetic induction panel 300.

According to an embodiment, the first plate 340 may be disposed on the second conductive pattern 362. For example, the second conductive pattern 362 may be disposed along the folding axis f of the hinge structure 260 within the first region 311 of the electromagnetic induction panel 300, and may overlap the first plate 340 when viewing the electromagnetic induction panel 300 from above. The second conductive pattern 362 may be in contact with the plurality of conductive vias 530 and the first conductive pattern 361 within the first region 311. By being disposed on the second conductive pattern 362 within the first region 311, the first plate 340 may reduce damage to the second conductive pattern 362, and the first conductive pattern 361 and/or the plurality of conductive vias 530 in contact with the second conductive pattern 362 according to a state change of an electronic device (e.g., the electronic device 101 of FIG. 1).

Referring to FIG. 5B, the second plates 550 may face the surface 300a of the electromagnetic induction panel 300 and may be disposed on another surface 300b facing the hinge structure 260. The second plates 550 may overlap the plurality of conductive vias 530 when viewing the electromagnetic induction panel 300 from above. The second plates 550 may be spaced apart from each other. For example, each of the plurality of conductive vias 530 may be spaced apart from each other. Since each of the second plates 550 overlaps each of the conductive vias 530, each of the second plates 550 may be spaced apart from each other. Since each of the second plates 550 is spaced apart from each other, the second plates 550 may provide flexibility to the first region 311 according to the state change the electronic device 101. According to an embodiment, each of the second plates 550 may be spaced apart by a preset interval. A region in which each of the second plates 550 is disposed may be a region in which the plurality of conductive vias 530 is disposed within the first region 311.

According to an embodiment, each of the second plates 550 may overlap at least a portion of the second conductive pattern 362, when viewing the electromagnetic induction panel 300 from above. For example, within the first region 311 of the electromagnetic induction panel 300, the second conductive pattern 362 may be disposed in a direction parallel to the folding axis f of the hinge structure 260. The second plates 550 may be respectively disposed in a region overlapping the second conductive pattern 362, when viewing the electromagnetic induction panel 300 from above, along the folding axis f within the first region 311. Each of the second plates may cover the second conductive pattern 362 disposed on the other surface 300b facing the surface 300a, facing the flexible display panel 230 of the electromagnetic induction panel 300. By covering the second conductive pattern 362 disposed on the other surface 300b, each of the second plates 550 may cover the plurality of conductive vias 530 and/or the first conductive pattern 361 in contact with the second conductive pattern 362. Since each of the second plates 550 overlaps the second conductive pattern 362, when viewing the electromagnetic induction panel 300 from above, each of the second plates 550 may reduce the damage to the second conductive pattern 362, and the first conductive pattern 361 and/or the plurality of conductive vias 530 in contact with the second conductive pattern 362 according to the state change of the electronic device 101. According to an embodiment, each of the second plates 550 may include at least one of PI, PET, PEN, epoxy resin, or CFRP.

According to an embodiment, a film member (e.g., the film member 390 of FIG. 3) may be disposed on the second plates 550. Since the film member 390 is disposed on the second plates 550, the film member 390 may block a foreign substance introduced into a gap disposed between the second plates 550 or a gap between the first electromagnetic induction panel 301 and the second electromagnetic induction panel 302.

Referring back to FIGS. 5A and 5B, each of the second plates 550 may overlap the first plate 340 within the first region 311 of the electromagnetic induction panel 300, when viewing the electromagnetic induction panel 300 from above. For example, the first plate 340 and the second plates 550 may be disposed in the first region 311 of the electromagnetic induction panel 300. The first plate 340 may extend along the folding axis f of the hinge structure 260 on the surface 300a of the electromagnetic induction panel 300. Each of the second plates 550 may be spaced apart from each other on the other surface 300b facing the surface 300a and may be disposed along the folding axis f. Since each of the second plates 550 overlapping the plurality of conductive vias 530 overlaps the first plate 340, when viewing the electromagnetic induction panel 300 from above, the electromagnetic induction panel 300 may reduce damage to the plurality of conductive vias 530 disposed within the first region 311 according to the state change of the electronic device 101.

According to the above-described embodiment, the electromagnetic induction panel 300 may reduce damage to the plurality of conductive vias 530 disposed within the first region 311 according to the state change of the electronic device 101 and the conductive pattern 360 in contact with the plurality of conductive vias 530, by including the first plate 340 disposed within the first region 311. By including the second plates 550 disposed to overlap each of the plurality of conductive vias 530 and spaced apart from each other, when viewing the electromagnetic induction panel 300 from above, within the first region 311, the electromagnetic induction panel 300 may reduce the damage to the plurality of conductive vias 530, and the conductive pattern 360 in contact with the plurality of conductive vias 530, according to the state change of the electronic device 101.

According to the above-described embodiment, an electronic device (e.g., the electronic device 101 of FIG. 1) may include a housing (e.g., the housing 200 of FIG. 2A) including a first housing (e.g., the first housing 210 of FIG. 2A) and a second housing (e.g., the second housing 220 of FIG. 2A), a hinge structure (e.g., the hinge structure 260 of FIG. 2C) that rotatably couples the first housing and the second housing, a flexible display (e.g., the flexible display panel 230 of FIG. 2A) disposed on the first housing and the second housing across the hinge structure, and an electromagnetic induction panel (e.g., the electromagnetic induction panel 300, the first electromagnetic induction panel 301, and the second electromagnetic induction panel 302 of FIG. 3) disposed on a surface (e.g., the internal surface 230b of FIG. 3) of the flexible display facing an inside of the housing. The electromagnetic induction panel may include a plurality of layers (e.g., the plurality of layers 320 of FIG. 3), at least one conductive via (e.g., the at least one conductive via 330 of FIG. 3) penetrating at least a portion of the plurality of layers within a first region 311 (e.g., the first region 311 of FIG. 3) of the electromagnetic induction panel, the first region overlapping at least a portion of the hinge structure when viewing the flexible display from above, a first plate (e.g., the first plate 340 of FIG. 3) disposed on a surface (e.g., the surface 300a, the fifth surface 301a, and the seventh surface 302a of FIG. 3) of the electromagnetic induction panel facing the flexible display along a folding axis (e.g., the f of FIG. 3) of the hinge structure within the first region, and second plates (e.g., the second plate 350 of FIG. 3 and the second plates 550 of FIG. 5B), disposed on another surface (e.g., the other surface 300b, the sixth surface 301b, and the eighth surface 302b of FIG. 3) of the electromagnetic induction panel facing the hinge structure, overlapping the at least one conductive via when viewing the electromagnetic induction panel from above, and spaced apart from each other. According to the above-mentioned embodiment, since the electronic device includes the first plate and the second plates disposed within the first region of the electromagnetic induction panel, the electronic device may reduce damage to a conductive via disposed within the first region according to a state change of the electronic device. The above-mentioned embodiment may have various effects including the above-mentioned effect.

According to an embodiment, the at least one conductive via may include a plurality of conductive vias (e.g., the plurality of conductive vias 530 of FIG. 5A), and the plurality of conductive vias may be disposed along the folding axis of the hinge structure within the first region. According to the above-mentioned embodiment, since the electronic device includes the plurality of conductive vias, the electronic device may electrically connect the layers disposed within the first region, respectively. The above-mentioned embodiment may have various effects including the above-mentioned effect.

According to an embodiment, each of the second plates may overlap the first plate within the first region when viewing the electromagnetic induction panel from above. According to the above-mentioned embodiment, since each of the second plates overlaps the first plate when viewing the electromagnetic induction panel from above, each of the second plates may reduce damage to the at least one conductive via disposed within the first region and reinforce rigidity of the first region. The above-mentioned embodiment may have various effects including the above-mentioned effect.

According to an embodiment, a thickness (e.g., the d2 of FIG. 3) of each of the second plates may be thicker than a thickness (e.g., the d1 of FIG. 3) of the first plate. According to the above-mentioned embodiment, by having a preset thickness, the first plate may reduce formation of unevenness on a support plate and/or the flexible display disposed on the electromagnetic induction panel. Since the thickness of each of the second plates is thicker than the thickness of the first plate, each of the second plates may reinforce rigidity of the first region of the electromagnetic induction panel more than the first plate. The above-mentioned embodiment may have various effects including the above-mentioned effect.

According to an embodiment, the electromagnetic induction panel may further include a first conductive pattern (e.g., the first conductive pattern 360 of FIG. 3 and the first conductive pattern 361 of FIG. 4A), extending in a direction perpendicular to the folding axis of the hinge structure, being in contact with the at least one conductive via within the first region (e.g., the second region 312 of FIG. 3), and a dummy pattern (e.g., the dummy pattern 400 of FIG. 4A), disposed between the first conductive pattern, disposed in a second region of the electromagnetic induction panel extending from the first region. According to the above-described embodiment, since the electromagnetic induction panel includes the dummy pattern disposed between the first conductive pattern, the electromagnetic induction panel may reduce formation of unevenness in the flexible display due to the first conductive pattern. Since the electromagnetic induction panel does not include the dummy pattern within the first region, the electromagnetic induction panel may provide flexibility to deformation of the first region according to a state change of the electronic device. The above-mentioned embodiment may have various effects including the above-mentioned effect.

According to an embodiment, each of the second plates may overlap the first conductive pattern within the first region, when viewing the electromagnetic induction panel from above. According to the above-mentioned embodiment, since each of the second plates overlaps the first plate, when viewing the electromagnetic induction panel from above within the first region, each of the second plates may reduce damage to the at least one conductive via and/or the conductive pattern disposed within the overlapping region, according to a state change of the electronic device. The above-mentioned embodiment may have various effects including the above-mentioned effect.

According to an embodiment, the first plate may overlap the first conductive pattern within the first region when viewing the electromagnetic induction panel from above. According to the above-mentioned embodiment, since each of the first plate overlaps the conductive pattern, when viewing the electromagnetic induction panel from above, the first plate may reduce damage to the first conductive pattern disposed within the first region, according to a state change of the electronic device. The above-mentioned embodiment may have various effects including the above-mentioned effect.

According to an embodiment, the electromagnetic induction panel may include a second conductive pattern (e.g., the conductive pattern 360 of FIG. 3 and the second conductive pattern 362 of FIG. 5A) extending along the folding axis of the hinge structure within the first region. According to an embodiment, the first plate may be disposed on the second conductive pattern. According to the above-mentioned embodiment, since the electromagnetic induction panel includes the second conductive pattern, the electromagnetic induction panel may electrically connect each of a plurality of conductive vias disposed within the first region. Since the first plate is disposed on the second conductive pattern, the first plate may reduce damage to the second conductive pattern, according to a state change of the electronic device. The above-mentioned embodiment may have various effects including the above-mentioned effect.

According to an embodiment, each of the second plates may overlap at least a portion of the second conductive pattern within the first region when viewing the electromagnetic induction panel from above. According to the above-mentioned embodiment, since each of the second plates overlaps at least a portion of the second conductive pattern when viewing the electromagnetic induction panel from above, each of the second plates may reduce damage to the second conductive pattern according to a state change of the electronic device. The above-mentioned embodiment may have various effects including the above-mentioned effect.

According to an embodiment, the electronic device may further include a support plate (e.g., the support plate 370 of FIG. 3), disposed between the flexible display and the electromagnetic induction panel, including a plurality of slits (e.g., the plurality of slits 370a of FIG. 3), within a region (e.g., the third display region 233 of FIG. 3) overlapping the first region when viewing the flexible display from above, parallel to the folding axis of the hinge structure. According to the above-mentioned embodiment, since the electronic device includes the support plate, the electronic device may support the flexible display. Since the support plate includes the plurality of slits, the support plate may provide flexibility to deformation of the flexible display according to a state change of the electronic device. The above-mentioned embodiment may have various effects including the above-mentioned effect.

According to an embodiment, the electromagnetic induction panel may further include a first adhesive layer (e.g., the adhesive layer 380 and the first adhesive layer 381 of FIG. 3) disposed between the surface of the electromagnetic induction panel and the flexible display within a second region extending from the first region. According to the above-mentioned embodiment, since the electromagnetic induction panel includes the first adhesive layer, the electromagnetic induction panel may fix the flexible display and/or the support plate on the electromagnetic induction panel. The above-mentioned embodiment may have various effects including the above-mentioned effect.

According to an embodiment, the electromagnetic induction panel may further include a second adhesive layer (e.g., the adhesive layer 380 and the second adhesive layer 382 of FIG. 3) disposed between the surface of the electromagnetic induction panel and the first plate within the first region. According to an embodiment, a thickness (e.g., the d3 of FIG. 3) of the first adhesive layer may be equal to the sum of a thickness (e.g., the d4 of FIG. 3) of the second adhesive layer and a thickness of the first plate. According to the above-mentioned embodiment, since the electromagnetic induction panel includes the second adhesive layer, the electromagnetic induction panel may fix the first plate on the surface within the first region. Since the thickness of the first adhesive layer is substantially equal to the sum of the thicknesses of the second adhesive layer and the first plate, the electromagnetic induction panel may reduce unevenness from being formed in the flexible display. By reducing the unevenness, when viewing the flexible display from the outside, a boundary portion between the second adhesive layer and the first plate being displayed may be reduced. The above-mentioned embodiment may have various effects including the above-mentioned effect.

According to an embodiment, the first region of the electromagnetic induction panel may have a curvature (e.g., the R2 of FIG. 4B) corresponding to a curvature (e.g., the R1 of FIG. 4B) of a region of the flexible display overlapping the hinge structure in a folded state where the first housing and the second housing face each other. According to the above-mentioned embodiment, since the curvature corresponding to the curvature of the first region has the curvature of a region of the flexible display overlapping the hinge structure in the folded state, the electromagnetic induction panel may reduce damage to the first region in the event of a fall of the electronic device and support the flexible display. The above-mentioned embodiment may have various effects including the above-mentioned effect.

According to an embodiment, the electromagnetic induction panel may further include a film member (e.g., the film member 390 of FIG. 3) that extends along the folding axis of the hinge structure within the first region and is disposed on the second plates. According to an embodiment, the film member may include thermo plastic polyurethane (TPU). According to the above-mentioned embodiment, by including the film member, the electromagnetic induction panel may block a foreign substance introduced into the support plate and/or the flexible display panel through a gap included in the electromagnetic induction panel. The above-mentioned embodiment may have various effects including the above-mentioned effect.

According to an embodiment, the first plate may include at least one of polyimide (PI), polyethylene terephthalate (PET), or polyethylene naphthalate (PEN), and each of the second plates may include at least one of PI, PET, PEN, epoxy resin, or carbon fiber reinforced plastic (CFRP). According to the above-mentioned embodiment, since the first plate includes a film material, the first plate may be configured to be thinner than each of the second plates. Since each of the second plates includes the epoxy resin or the CFRP, each of the second plates may reinforce rigidity of the first region more than the first plate. The above-mentioned embodiment may have various effects including the above-mentioned effect.

According to an embodiment, an electronic device may include a housing including a first housing and a second housing, a hinge structure that rotatably couples the first housing and the second housing, a flexible display disposed on the first housing and the second housing across the hinge structure, and an electromagnetic induction panel disposed on a surface of the flexible display facing an inside of the housing. According to an embodiment, the electromagnetic induction panel may include a plurality of layers, and at least one conductive via penetrating at least a portion of the plurality of layers within a first region of the electromagnetic induction panel, the first region overlapping the hinge structure when viewing the flexible display from above, a dummy pattern disposed within a second region extending from the first region, and a first conductive pattern, disposed between the dummy pattern, extending in a direction perpendicular to the folding axis of the hinge structure from the at least one conductive via. According to an embodiment, the electromagnetic induction panel may further include a first plate disposed on a surface of the electromagnetic induction panel facing the flexible display along the folding axis of the hinge structure within the first region, and second plates disposed on another surface of the electromagnetic induction panel facing the hinge structure, overlapping the at least one conductive via when viewing the electromagnetic induction panel from above, and spaced apart from each other. According to the above-mentioned embodiment, since the electronic device includes the first plate and the second plates disposed within the first region of the electromagnetic induction panel, the electronic device may reduce damage to a conductive via disposed within the first region according to a state change of the electronic device. Since the electromagnetic induction panel includes the dummy pattern disposed between the first conductive pattern, the electromagnetic induction panel may reduce formation of unevenness in the flexible display due to the first conductive pattern. Since the electromagnetic induction panel does not include the dummy pattern within the first region, the electromagnetic induction panel may provide flexibility to deformation of the first region according to a state change of the electronic device. The above-mentioned embodiment may have various effects including the above-mentioned effect.

According to an embodiment, the at least one conductive via may include a plurality of conductive vias, and the plurality of conductive vias may be disposed along the folding axis of the hinge structure within the first region. According to the above-mentioned embodiment, since the electronic device includes the plurality of conductive vias, the electronic device may electrically connect the layers disposed within the first region, respectively. The above-mentioned embodiment may have various effects including the above-mentioned effect.

According to an embodiment, a thickness of each of the second plates may be thicker than a thickness of the first plate. According to the above-mentioned embodiment, by having a preset thickness, the first plate may reduce formation of unevenness on a support plate and/or the flexible display disposed on the electromagnetic induction panel. Since the thickness of each of the second plates may be thicker than the thickness of the first plate, each of the second plates may reinforce rigidity of the first region of the electromagnetic induction panel more than the first plate. The above-mentioned embodiment may have various effects including the above-mentioned effect.

According to an embodiment, each of the second plates may overlap the first conductive pattern within the first region, when viewing the electromagnetic induction panel from above. According to the above-mentioned embodiment, since each of the second plates overlaps the first plate, when viewing the electromagnetic induction panel from above within the first region, each of the second plates may reduce damage to the at least one conductive via and/or the conductive pattern disposed within the overlapping region, according to a state change of the electronic device. The above-mentioned embodiment may have various effects including the above-mentioned effect.

According to an embodiment, the electromagnetic induction panel may include a second conductive pattern extending along the folding axis of the hinge structure within the first region. According to an embodiment, the first plate may be disposed on the second conductive pattern. According to the above-mentioned embodiment, since the electromagnetic induction panel includes the second conductive pattern, the electromagnetic induction panel may electrically connect each of a plurality of conductive vias disposed within the first region. Since the first plate is disposed on the second conductive pattern, the first plate may reduce damage to the second conductive pattern, according to a state change of the electronic device. The above-mentioned embodiment may have various effects including the above-mentioned effect.

According to an embodiment, the electronic device may further include a support plate, disposed between the flexible display and the electromagnetic induction panel, including a plurality of slits, within a region overlapping the first region when viewing the flexible display from above, parallel to the folding axis of the hinge structure. According to the above-mentioned embodiment, since the electronic device includes the support plate, the electronic device may support the flexible display. Since the support plate includes the plurality of slits, the support plate may provide flexibility to deformation of the flexible display according to a state change of the electronic device. The above-mentioned embodiment may have various effects including the above-mentioned effect.

According to an embodiment, the first region of the electromagnetic induction panel may have a curvature corresponding to a curvature of a region of the flexible display overlapping the hinge structure in a folded state where the first housing and the second housing face each other. According to the above-mentioned embodiment, since the curvature corresponding to the curvature of the first region has the curvature of a region of the flexible display overlapping the hinge structure in the folded state, the electromagnetic induction panel may reduce damage to the first region in the event of a fall of the electronic device and support the flexible display. The above-mentioned embodiment may have various effects including the above-mentioned effect.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a housing (200) including a first housing (210) and a second housing (220);
a hinge structure (260) that rotatably couples the first housing (210) and the second housing (220);
a flexible display (230) disposed on the first housing (210) and the second housing (220) across the hinge structure (260); and
an electromagnetic induction panel (300; 301; 302) disposed on a surface (230b) of the flexible display (230) facing an inside of the housing (200),
wherein the electromagnetic induction panel (300; 301; 302) includes:
a plurality of layers (320);
at least one conductive via (330) penetrating at least a portion of the plurality of layers (320) within a first region (311) of the electromagnetic induction panel (300; 301; 302), the first region overlapping at least a portion of the hinge structure (260) when viewing the flexible display (230) from above;
a first plate (340) disposed on a surface (300a; 301a; 302a) of the electromagnetic induction panel (300; 301; 302) facing the flexible display (230) along a folding axis (f) of the hinge structure (260) within the first region (311); and
second plates (350; 550), disposed on another surface (300b; 301b; 302b) of the electromagnetic induction panel (300; 301; 302) facing the hinge structure (260), overlapping the at least one conductive via (330) when viewing the electromagnetic induction panel (300; 301; 302) from above, and spaced apart from each other.

2. The electronic device (101) of claim 1,
wherein the at least one conductive via (330) includes a plurality of conductive vias (530; 531; 532), and
wherein the plurality of conductive vias (530; 531; 532) are disposed along the folding axis (f) of the hinge structure (260) within the first region (311).

3. The electronic device (101) of claim 1 or claim 2,
wherein each of the second plates (350; 550) overlaps the first plate (340) within the first region (311) when viewing the electromagnetic induction panel (300; 301; 302) from above.

4. The electronic device (101) of any one of claims 1 to 3,
wherein a thickness (d2) of each of the second plates (350; 550) is thicker than a thickness (d1) of the first plate (340).

5. The electronic device (101) of any one of claims 1 to 4,
wherein the electromagnetic induction panel (300; 301; 302) further includes:
a first conductive pattern (360; 361), extending in a direction perpendicular to the folding axis (f) of the hinge structure (260), being in contact with the at least one conductive via (330) within the first region (311); and
a dummy pattern (400), disposed between the first conductive pattern (360; 361), disposed in a second region (312) of the electromagnetic induction panel (300; 301; 302) extending from the first region (311).

6. The electronic device (101) of any one of claims 1 to 5,
wherein each of the second plates (350; 550) overlaps the first conductive pattern (360; 361) within the first region (311) when viewing the electromagnetic induction panel (300; 301; 302) from above.

7. The electronic device (101) of any one of claim 1 to 6,
wherein the first plate (340) overlaps the first conductive pattern (360; 361) within the first region (311) when viewing the electromagnetic induction panel (300; 301; 302) from above.

8. The electronic device (101) of any one of claims 1 to 7,
wherein the electromagnetic induction panel (300; 301; 302) includes a second conductive pattern (360; 362) extending along the folding axis (f) of the hinge structure (260) within the first region (311), and
wherein the first plate (340) is disposed on the second conductive pattern (360; 362).

9. The electronic device (101) of any one of claim 1 to 8,
wherein each of the second plates (350; 550) overlaps at least a portion of the second conductive pattern (360; 362) within the first region (311) when viewing the electromagnetic induction panel (300; 301; 302) from above.

10. The electronic device (101) of any one of claims 1 to 9, further comprising:
a support plate (370), disposed between the flexible display (230) and the electromagnetic induction panel (300; 301; 302), including a plurality of slits (370a), within a region (233) overlapping the first region (311) when viewing the flexible display (230) from above, parallel to the folding axis (f) of the hinge structure (260).

11. The electronic device (101) of any one of claims 1 to 10,
wherein the electromagnetic induction panel (300; 301; 302) further includes a first adhesive layer (380; 381) disposed between the electromagnetic induction panel (300; 301; 302) and the flexible display (230) within a second region (312) extending from the first region (311).

12. The electronic device (101) of any one of claims 1 to 11,
wherein the electromagnetic induction panel (300; 301; 302) further includes a second adhesive layer (380; 382) disposed between the surface (300a; 301a; 302a) of the electromagnetic induction panel (300; 301; 302) and the first plate (340) within the first region (311),
wherein a thickness (d3) of the first adhesive layer (380; 381) is equal to the sum of a thickness (d4) of the second adhesive layer (380; 382) and a thickness (d1) of the first plate.

13. The electronic device (101) of any one of claims 1 to 12,
wherein the first region (311) of the electromagnetic induction panel (300; 301; 302) has a curvature (R2) corresponding to a curvature (R1) of a region (233) of the flexible display (230) overlapping the hinge structure (260) in a folded state where the first housing (210) and the second housing (220) face each other.

14. The electronic device (101) of any one of claims 1 to 13,
wherein the electromagnetic induction panel (300; 301; 302) further includes a film member (390) that extends along the folding axis (f) of the hinge structure (260) within the first region (311) and is disposed on the second plates (350; 550), and
wherein the film member (390) includes thermo plastic polyurethane (TPU).

15. The electronic device (101) of any one of claims 1 to 14,
wherein the first plate (340) includes at least one of polyimide (PI), polyethylene terephthalate (PET), or polyethylene naphthalate (PEN), and
wherein each of the second plates (350; 550) includes at least one of PI, PET, PEN, epoxy resin, or carbon fiber reinforced plastic (CFRP).
